(19) Europäisches Patentamt
European Patent Office
Office européen des brevets

(11) **EP 3 969 962 B1**

(12) **EUROPEAN PATENT SPECIFICATION**

(45) Date of publication and mention
of the grant of the patent:
**27.05.2026 Bulletin 2026/22**

(21) Application number: **19733693.6**

(22) Date of filing: **18.06.2019**

(51) International Patent Classification (IPC):
*G02F 1/017* (2006.01)    *G02B 6/122* (2006.01)
*G02F 1/025* (2006.01)

(52) Cooperative Patent Classification (CPC):
**G02F 1/017; G02B 6/1228; G02F 1/025**

(86) International application number:
**PCT/EP2019/066092**

(87) International publication number:
**WO 2020/253951 (24.12.2020 Gazette 2020/52)**

(54) **ELECTROABSORPTION MODULATOR FOR AN EXTERNALLY MODULATED LASER**

ELEKTROABSORPTIONSMODULATOR FÜR EINEN EXTERN MODULIERTEN LASER

MODULATEUR D'ÉLECTROABSORPTION POUR LASER À MODULATION EXTERNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2022 Bulletin 2022/12**

(73) Proprietor: **Huawei Technologies Co., Ltd.
Longgang District
Shenzhen,
Guangdong 518129 (CN)**

(72) Inventor: **MOODIE, David
80992 Munich (DE)**

(74) Representative: **Roth, Sebastian
Mitscherlich PartmbB
Karlstraße 7
80333 München (DE)**

(56) References cited:
WO-A1-01/88577        GB-A- 2 483 283
JP-A- 2004 163 753    US-A1- 2003 007 719
US-A1- 2007 077 017    US-B1- 6 240 233

## Description

TECHNICAL FIELD

The present disclosure relates to an electroabsorption modulator (EAM). In particular, the disclosure proposes an EAM for an externally modulated laser, like an electroabsorption modulated laser (EML). The present disclosure also relates to an EML including at least one such EAM.

BACKGROUND

An EML is a laser diode integrated with an EAM in a single device. EMLs are widely used in client side interface fibre optic transmission systems. For future applications, there are expected to be requirements for higher dynamic optical output powers in higher bit-rate, longer reach, and advanced modulation format systems. However, there are limitations on maintaining a good EML performance at higher dynamic optical output powers.

Firstly, the dynamic optical loss of the EAM of a conventional EML increases at higher Distributed Feedback (DFB) laser optical powers. The achievable dynamic optical output power of the EML is thus limited. This is due to the localized heating effects of the relatively high photocurrent generated in the EAM under the high laser optical power which can increase absorption in the EAM.

Secondly, an eye diagram of a conventional EML becomes typically noisy at high DFB laser optical powers, due to saturation effects in the EAM of the EML. Saturation effects resulting from photo-generated carriers in the EAM include photo-generated carrier screening and reduction of the applied field, and include RF compression. Saturation effects are made even worse by localized heating, which shifts the bandgap and increases absorption in a positive feedback effect.

Several conventional approaches have been proposed to improve the optical power handling of an EAM. Some of the approaches are described in the following, including their respective disadvantages:

- A buried heterostructure (BH) was proposed, rather than using a ridge waveguide geometry. This BH geometry generally allows a lower capacitance per unit length, and thus a longer, more distributed absorption. The thermal conductivity of the BH geometry can also be superior to a ridge waveguide geometry, thus giving a lower temperature increase. However, in a typical BH EAM as in a typical ridge waveguide EAM, the geometry and absorber layer does not change along the length of the EAM, so that the absorption coefficient at low optical powers is approximately constant versus length. This results in a photo-generated carrier density that exponentially decreases along the length of the EAM. Another disadvantage is that a ridge EAM geometry is simpler and more commonly used.

- A peripheral coupled waveguide geometry EAM was proposed, in which the absorber layer was placed at the edge of the optical mode, thus allowing a longer device. Such a geometry, however, would be difficult to monolithically integrate with a DFB laser.

- Segmented EAMs, in which active waveguide sections are interspersed with passive waveguide sections, have been proposed, in order to spread the heating over a longer waveguide length, thus limiting the maximum increase in temperature. However, introducing the passive regions between active modulator regions introduces extra optical and microwave loss.

- Tapered peripheral coupled waveguides have been proposed, in which the lower ridge has a linear taper. The tapered EAM shows a more efficient optical power handling capability, mostly due to the smaller absorbed optical power at the front facet. However, the EAM is unusually long, and consequently has a low modulation bandwidth of 500MHz. Further, while optical power handling is improved, the maximum rate of photocurrent generation per unit length was not minimized.

US 2003007719 A1 discloses a photonic integrated circuit comprising a first waveguide with a first mode of light propagating therein and a second waveguide with a second mode of light propagating therein, wherein the first and second modes of light have different effective indices of refraction, and a taper formed in the second waveguide facilitates communication of light between waveguides.

US 2007077017 A1 discloses an asymmetric twin waveguide structure with quantum-well intermixing in the taper region of the active waveguide. The structure comprises a first waveguide, a second waveguide, and a taper formed in the second waveguide. The taper has an intermixed area formed therein comprising a plurality of quantum wells intermixed with a plurality of barriers.

WO 0188577 A1 discloses a photonic integrated circuit "PIC" device comprising two or more vertically stacked asymmetric waveguides.

US 6240233 B1 discloses an integrated structure of a beam spread transformer with several buffer layers separated from each other by light guiding layers.

GB 483283 A discloses an optoelectronic device comprising an optical waveguide for modulating light. The device also comprises an electrode overlying the waveguide for electrically biasing the waveguide to effect such modulation. A portion of the waveguide underneath the electrode is tapered.

JP 2004163753 A discloses an optical waveguide type semiconductor optical device comprising an optical waveguide comprising at least a core layer having at least a function of absorbing light and a clad layer on a semiconductor substrate.

## SUMMARY

In view of the above-mentioned disadvantages, embodiments of the present invention aim to improve the conventional EAMs and approaches.

This is achieved by the embodiments of the invention as described in the enclosed independent claims. Advantageous implementations of the present invention are further defined in the dependent claims.

In particular, some embodiments of the invention propose designing the EAM such that it has a non-uniform modal absorption coefficient along its length. At least over a substantial part of the EAM length (including the region where the optical power is highest), the optical power decays linearly versus length. This approach yields an EAM with minimized maximum photocurrent per unit length.

A first aspect of the invention provides an EAM, the EAM comprising: a waveguide configured to guide laser light, at least one electrode configured to apply an electric field across the waveguide at least along a first waveguide section, wherein a width of the waveguide tapers non-linearly at least along the first waveguide section, wherein the waveguide includes a one or more quantum well absorber region in the first waveguide section, and wherein the EAM is characterized in that a material absorption coefficient of at least one quantum well changes along the first waveguide section.

The EAM is in particular configured to be used in an EML. However, the EML is only one of many possible applications for the EAM. For instance, the EAM could also be used in monolithically integrated circuits and hybridly integrated circuits comprising optoelectronic components on a silicon wafer etc. The EAM of the first aspect may have more than one electrode to apply the electric field. For instance, an electrode layer may be provided at the bottom of the EAM (chip). In the EAM, for example, a voltage may be applied between a p-contact and an n-contact electrode, which in turn results in an electric field across the depletion region of a PiN junction containing a multiple quantum well absorber material.

Due to the non-linear tapering of the width of the waveguide in the first waveguide section, the local maximum photo-generated current per unit length can be minimized in this first waveguide section. The first waveguide section is the above-mentioned substantial part of the EAM length (including the region where the optical power is highest), where the optical power decays linearly versus length when the EAM is biased in its absorbing state during operation. The EAM of the first aspect shows improved performance, and particularly allows higher dynamic output powers.

In an implementation form of the first aspect, a width of the first waveguide section defines a lateral optical confinement of the waveguide.

At least the first waveguide section of the waveguide, but possibly the complete waveguide, may be implemented as a ridge waveguide. A "width" of the waveguide is defined perpendicular to the light guiding direction of the waveguide, and in-plane of that light guiding direction. For a ridge waveguide, the "width" is the lateral extension of the freestanding ridge structure. The optical confinement is particularly obtained by choosing for the waveguide a higher refractive index than for adjacent materials.

A first aspect of the invention provides an EAM, the EAM comprising: a waveguide configured to guide laser light, at least one electrode configured to apply an electric field across the waveguide at least along a first waveguide section, wherein a width of the waveguide tapers non-linearly at least along the first waveguide section.

The EAM is in particular configured to be used in an EML. However, the EML is only one of many possible applications for the EAM. For instance, the EAM could also be used in monolithically integrated circuits and hybridly integrated circuits comprising optoelectronic components on a silicon wafer etc. The EAM of the first aspect may have more than one electrode to apply the electric field. For instance, an electrode layer may be provided at the bottom of the EAM (chip). In the EAM, for example, a voltage may be applied between a p-contact and an n-contact electrode, which in turn results in an electric field across the depletion region of a PiN junction containing e.g. a multiple quantum well absorber material.

Due to the non-linear tapering of the width of the waveguide in the first waveguide section, the local maximum photo-generated current per unit length can be minimized in this first waveguide section. The first waveguide section is the above-mentioned substantial part of the EAM length (including the region where the optical power is highest), where the optical

In an implementation form of the first aspect, an optical power of laser light guided in the waveguide decreases linearly along the first waveguide section in the absorbing state during operation.

Due to this linear decrease, the maximum local photo-generated current per unit length can be minimized. Accordingly, the EAM shows improved performance at higher laser optical powers.

In an implementation form of the first aspect, an absorption coefficient of a guided mode of the waveguide changes along the first waveguide section.

The "guided mode" is the mode of the (laser) light that is guided in the waveguide.

In an implementation form of the first aspect, a rate of photocurrent current generated per unit length by laser light guided in the waveguide changes by not more than 20%, particularly changes by not more than 5-10%, more particularly is constant, along the first waveguide section.

Thus, the photocurrent per unit length is nearly constant or constant. A constant photocurrent per unit length rate limits the maximum localized heating of the EAM, thereby improving the performance of the EAM at higher laser optical powers.

In an implementation form of the first aspect, the waveguide comprises a second waveguide section, particularly with a constant waveguide width, adjacent to the first waveguide section with respect to the length of the waveguide.

The second waveguide section can be arranged after the first waveguide section, where the laser optical power guided in the waveguide has already significantly decreased.

In an implementation form of the first aspect, the waveguide includes an active region, wherein the first waveguide section is included in the active region and covers at least the first half of the total length of the active region of the waveguide.

The "active region" is the region along the waveguide, across which the electric field can be applied by means of the at least one electrode, in order to modulate the (laser) light in the EAM. The light is not modulated in the "passive region" of the waveguide. In other words, only the "active region" is the part of the waveguide associated with the electrodes providing a biasing voltage.

A material absorption coefficient of the at least one quantum well changing along the first waveguide section can reduce the amount of non-linear tapering that is necessary to minimize the local photo-generated current per unit length.

In an implementation form of the first aspect, the waveguide is formed in a ridge, particularly in a shallow etched ridge.

In this implementation form, the width of the ridge defining the waveguide (specifically the first waveguide section) is non-linearly tapered.

In an implementation form of the first aspect, the waveguide is formed in a heterostructure, particularly in a buried heterostructure.

In this implementation form, the width of the active absorber region (e.g. the multiple quantum well absorber region) defining the waveguide (specifically the first waveguide section) is non-linearly tapered.

In an implementation form of the first aspect, an electric field applied by the at least one electrode across the waveguide changes in strength along the first waveguide section.

This further supports minimizing the maximum local photo-generated current per unit length.

In an implementation form of the first aspect, the EAM further comprises a further waveguide arranged next to and laterally coupled to the waveguide.

This is a way to control the amount of coupling along the length of the first waveguide section. The second waveguide may be used to vary the optical confinement factor along the EAM.

In an implementation form of the first aspect, a gap between the waveguide and the further waveguide, and/or a relative width of the waveguide compared to the further waveguide, changes along the first waveguide section.

In an implementation form of the first aspect, the EAM further comprises an input passive waveguide optically coupled to a first end of the waveguide and an output passive waveguide optically coupled to a second end of the waveguide.

Notably, there are many ways of defining passive optical waveguides at the EAM input and output. For example, stopping the electrode and removing or passivating the highly p-doped contact layers.

A second aspect of the invention provides an externally modulated laser (EML) including an EAM according to the first aspect or any of its implementation forms.

The advantages and effects described above for the EAM and its implementation forms can thus beneficially be used in the EML. The EML is suitable for higher dynamic output optical powers and shows a less noisy eye diagram.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

BRIEF DESCRIPTION OF DRAWINGS

The above described aspects and implementation forms of the present invention will be explained in the following description of specific embodiments in relation to the enclosed drawings, in which

FIG. 1     shows an EAM according to an embodiment of the invention.

FIG. 2     shows an EAM according to an embodiment of the invention.

FIG. 3     shows a simulated optical confinement factor in quantum wells versus a waveguide width in an EAM according to an embodiment of the invention.

FIG. 4     shows a simulated ratio of a required modal absorption coefficient of an idealized design of an EAM according to an embodiment of the invention to that of a benchmark EAM design versus length of the EAM(s).

FIG. 5     shows a waveguide width variation along the length of a waveguide of an EAM according to an embodiment of the invention.

FIG. 6     shows a simulated variation in optical power along the length of an EAM according to an embodiment of the invention.

FIG. 7     shows a simulated photocurrent generation per unit length along the length of the EAM in its absorbing state.

FIG. 8     shows an EAM according to an embodiment of the invention.

FIG. 9     shows an EAM according to an embodiment of the invention.

FIG. 10    shows an EAM according to an embodiment of the invention.

## DETAILED DESCRIPTION OF EMBODIMENTS

Embodiments of the invention provide an EAM with an improved performance at high laser optical powers, thus enabling higher dynamic optical output powers. One goal is to design the EAM such that a peak local photo-generated current per unit length is minimized. Further, a maximum localized heating of the EAM should be limited. The dynamic loss of the EAM should not significantly increase at higher laser optical power. The EAM should as a consequence enable the construction of an improved EML. In particular, the amount of noise in an eye diagram of the EML at high laser optical powers should be reduced.

The following embodiment is not encompassed by the wording of the claims but is considered as useful for understanding the invention.

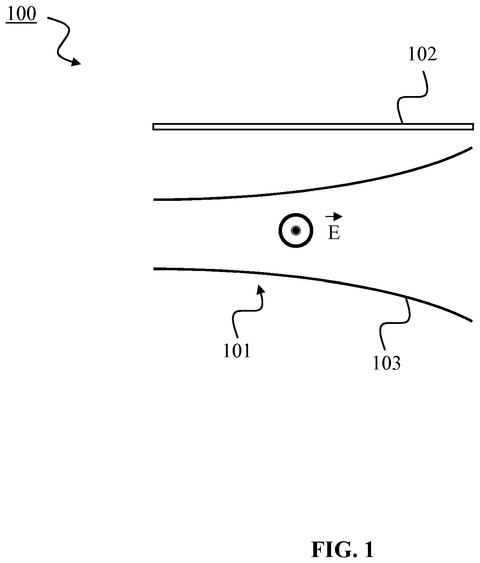

FIG. 1 shows an EAM 100 according to an embodiment of the invention. The EAM may be configured for use in an EML. That is, the EML can include the EAM 100 to modulate laser light.

The EAM 100 includes a waveguide 101, which is configured to guide laser light, e.g. as provided by a laser diode of the EML. The waveguide 101 may be a ridge waveguide or may be a heterostructure waveguide. In other words, the waveguide 101 may be formed in a ridge, particularly in a shallow etched ridge, or may be formed in a heterostructure, particularly in a buried heterostructure. The waveguide 101 includes at least a first waveguide section 103 as shown in FIG. 1. The waveguide 101 may, however, include one or more further sections.

The EAM 100 includes further at least one electrode 102, which is configured to apply an electric field across the waveguide 101 - at least along a first waveguide section 103. In particular, the EAM 100 may include at least one pair of electrodes 102, e.g. arranged on opposite sides of the waveguide, e.g. below and above the waveguide 101, to apply the electric field across the waveguide 101, in particular vertically across the waveguide. To this end, a voltage may be applied to the electrode 102, which gives rise to an electric field across the depletion region.

In the EAM 100, a width of the waveguide 101 tapers non-linearly at least along the first waveguide section 103. The first waveguide section 103 may take a substantial part of the entire length of the active section of the EAM, and may particularly include a region where the optical power is highest. In the first waveguide section 103, the optical power may decay linearly versus length (i.e. along the light guiding direction), in order to minimize the maximum photocurrent per unit length when the EAM is biased in its absorbing state in operation. In some embodiments, the first waveguide section 103 may be included in an active region and may cover at least a first half of the total length of the active region of the waveguide 101. The first half of the total length of the active region is the half of the active region that guided light passes through first in operation.

The EAM 100 therefore maintains an approximately uniform rate of photocurrent generation per unit length over at least the first waveguide section 103 when the EAM is biased in its absorbing state in operation. In the first waveguide section 103, the photocurrent per unit length may particularly vary by less than 20% over at least the first 50% of length of the active section of the EAM, for example.

The ideal requirement would be a uniform rate of change of optical power (P) along the active section length (l), as described by the following equation where k is a constant:

$$\frac{\Delta P}{\Delta l} = -k$$

The ideal requirement can be achieved, if the modal absorption coefficient $\propto$ varies with the length along the first waveguide section 103 as follows:

$$\propto = -\frac{1}{\Delta l}\ln(1 - \frac{k\Delta l}{P_0 - kl})$$

Thereby, $l$ is the distance along the length of the active section from the start to the point where $\propto$ is being calculated and $P_o$ is the input power at the start of the first waveguide section 103.

The required value of the product of the confinement factor and the length of the active section of the EAM, in order to achieve a required ON/OFF ratio, can be established either by simulation and measurement, e.g. by considering the case where the EAM modal absorption has its typical value along its length. Then the second equation can be used to estimate the required modal absorption at small discrete steps along the length of the EAM 100. This information can then be used to adjust the EAM design (waveguide width) along the length of the first waveguide section 103.

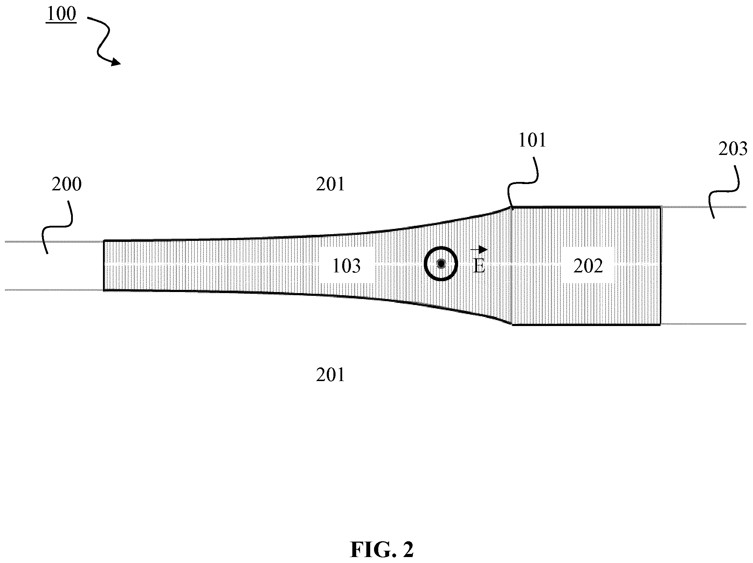

A particular way to do this is to provide the non-linear taper in the waveguide width along the first waveguide section 103. The waveguide 101 may, for instance, be implemented as a shallow etched ridge waveguide, so that the confinement factor of light in quantum wells of a multiple quantum well absorber layer, and therefore the absorption coefficient of the guided mode, varies according to the second equation over the first waveguide section 103. The non-linear taper of the first waveguide section 103 is illustrated schematically in FIG. 1 and 2.

FIG. 2 shows an EAM 100 according to an embodiment of the invention, which builds on the EAM 100 shown in FIG. 1. Same elements in FIG. 1 and FIG. 2 share the same reference signs and function likewise. In particular, FIG. 2 shows a waveguide 101 of the EAM 100, which is exemplarily formed in a ridge, particularly in a shallow etched ridge. The waveguide 101 is coupled to a passive optical input waveguide 200 of the EAM 100 (to receive laser light) and to a passive optical output waveguide 203 of the EAM 100 (to output modulated laser light). The waveguide 101 includes the non-linearly tapered first waveguide section 103, and here in FIG. 2 includes further a second waveguide section 202, particularly with a constant waveguide width, adjacent to the first waveguide section 103 with respect to the length of the waveguide 101. A dielectric 201 is arranged to both sides of the ridge waveguide. The active region of the waveguide 101 may include the first waveguide section 103 and the second waveguide section 202. The waveguide 101 includes a one or more quantum well absorber region in the first waveguide section 103. A material absorption coefficient of at least one quantum well changes along the first waveguide section 103.

For obtaining the design of the EAM 100 shown in FIG. 2, a "benchmark" shallow etched ridge waveguide EAM (without tapered waveguide section), designed for operation at around 1.3 $\mu$m wavelength and compatible with a shallow etched ridge waveguide DFB laser, was considered as a starting point. Notably, the EAM includes a multiple quantum well absorber region and is provided on an InP substrate.

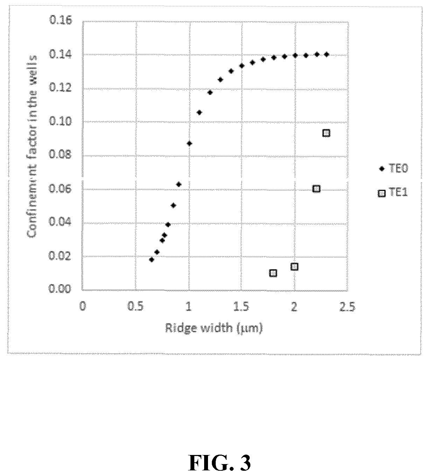

The confinement factor of the light in the quantum wells of the benchmark EAM was first simulated as a function of the ridge width - as plotted in FIG. 3. A typical ridge width based on the benchmark design would be around 2.0 $\mu$m, since for widths > 2.1 $\mu$m the TE1 higher order mode is increasingly supported. It can be seen that the confinement factor in the quantum wells of the fundamental TE0 mode varies strongly with the ridge width over the range simulated.

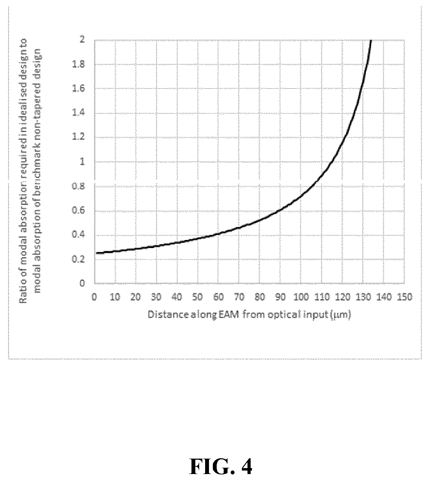

The benchmark (non-tapered standard-width) EAM with this absorber layer design had a 17dB ON/OFF ratio, achieved in 150 $\mu$m of EAM length. The tapered EAM 100 was then designed, based on the benchmark design, to have a constant rate of change of power versus length (k) in its absorbing state over a substantial portion of its length including its optical input, which change is the same as the overall change in power divided by length in the benchmark device. Assuming an input power to the EAM of $P_o$ = 20 mW, and considering an idealized case where the EAM length is unchanged at 150 $\mu$m, the target uniform rate of change of power with length is 0.131mW/$\mu$m (derived from the first equation). The required modal absorption versus length was then calculated using the second equation. The ratio of that to the constant modal absorption of the benchmark EAM is plotted in FIG. 4. The required rate of absorption starts at approximately 25% of that of the benchmark device.

Notably, in the EAM 100 according to an embodiment of the invention, in order to avoid complicated fabrication steps, the absorber layer absorption coefficient is not varied along the length, so that the modal absorption coefficient can be determined by the optical confinement factor of the absorbing material and thus the ridge width. Considering the modal absorption coefficient to be the product of the absorption coefficient of the quantum wells and the optical confinement factor of the quantum wells, the ratio of the required and benchmark modal absorption coefficients in FIG. 4 is equal to the ratio of the required and benchmark optical confinement factors.

In the idealized case, where it is desired to keep the device length and the ON/OFF ratio the same as in the benchmark device, the simulations suggest that the confinement factor of the wells would be required to increase steeply beyond that of the benchmark device for lengths above 115 $\mu$m. FIG. 3, shows that this cannot be readily achieved, and so once the ridge width reached 1.7 $\mu$m, it remained at this value. The length of the EAM could then be extended to 215 $\mu$m to give the same integrated product of confinement factor and length, and thus expected ON/OFF ratio as in the benchmark device, in order to compensate for the less than idealized modal absorption coefficient at the optical output side of the EAM 100.

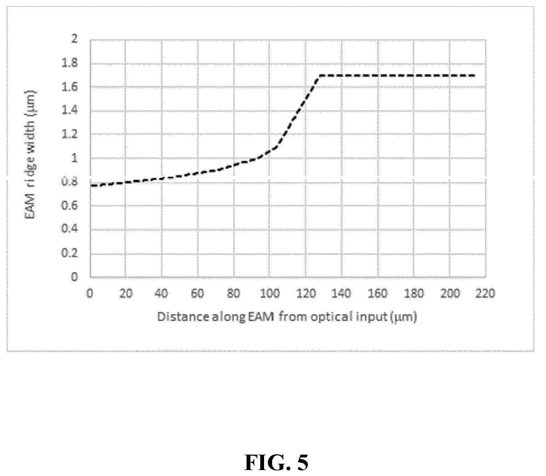

The resulting designed values for the ridge width along the length of the EAM 100 are shown in FIG. 5. Although the length of the EAM 100 is longer than for the benchmark EAM design, the product of the average width and length was slightly less, so that the RC limited modulation bandwidth of the nonlinear tapered EAM 100 is expected to be similar to that of the benchmark EAM.

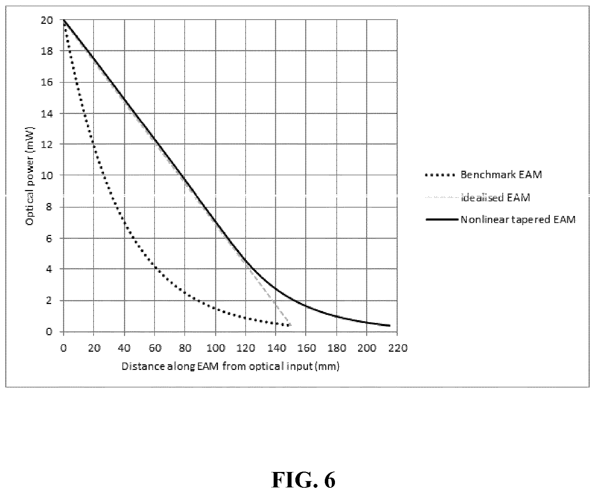

The resulting simulated variation of optical power along the length of the optimized non-linearly tapered EAM 100 is plotted in FIG. 6 in comparison with the benchmark EAM and the idealized EAM. This is the power when the EAM 100 is in its absorbing state.

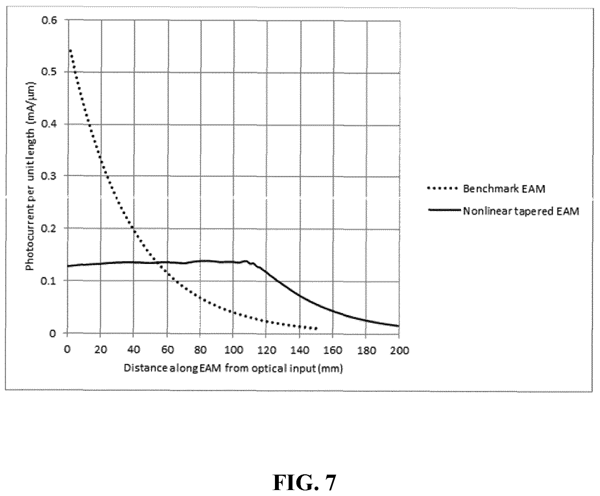

The resulting simulated variation in the photocurrent per unit length generation rate for the optimized non-linearly tapered EAM 100 is shown in FIG. 7. This is the photocurrent when the EAM 100 is in its absorbing state. The peak photocurrent generation per unit length at the front of the EAM 100 has been reduced to <25% of that of the benchmark EAM, and the photocurrent generation per unit length is kept approximately constant over the first half of the EAM 100. Thus the optimized non-linearly tapered EAM 100 experiences much less (Ohmic) heating at the front of the device, decreasing the maximum local temperature, and so functions better at higher optical input powers than the benchmark EAM.

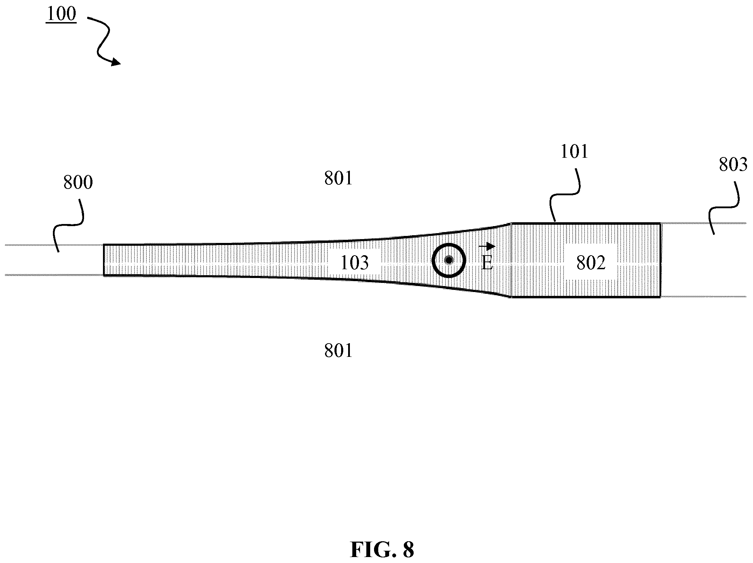

FIG. 8 shows an EAM 100 according to an embodiment of the invention, which builds on the EAM 100 shown in FIG. 1. Same elements in FIG. 1 and FIG. 8 share the same reference signs and function likewise. In particular, FIG. 8 shows the waveguide 101 of the EAM 100, which is formed in this case in a heterostructure, particularly in a buried heterostructure. The waveguide 101 is coupled to a passive optical input waveguide 800 of the EAM 100, and to a passive optical output waveguide 803 of the EAM 100. The waveguide 101 includes the non-linearly tapered first waveguide section 103, and has a second waveguide section 802, particularly with a constant waveguide width, adjacent to the first waveguide section 103 with respect to the length of the waveguide 101. A semi-insulating material 801, e.g. Fe-doped InP, may be arranged on both sides of the mesa waveguide 101. To design the EAM 100 of FIG. 8, the above-described procedure was followed, but from a benchmark EAM with a buried heterostructure waveguide. The waveguide 101 includes a one or more quantum well absorber region in the first waveguide section 103. A material absorption coefficient of at least one quantum well changes along the first waveguide section 103.

In some embodiments, a quantum well absorption coefficient may be varied along the length of the first waveguide section 103, e.g. by using some technique to control the bandgap. In this case the waveguide 101 could be made less tapered in the first waveguide section 103.

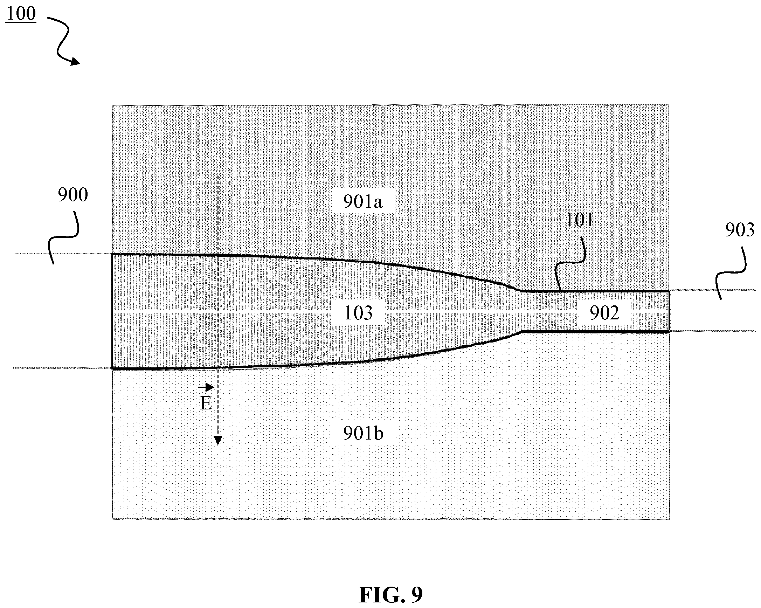

FIG. 9 shows an EAM 100 according to an embodiment of the invention, which builds on the EAM 100 shown in FIG. 1. Same elements in FIG. 1 and FIG. 9 share the same reference signs and function likewise. In particular, FIG. 9 shows the waveguide 101 of the EAM 100, which is formed in this case in a heterostructure, particularly in a buried heterostructure lateral field EAM. An electric field (indicated by the dashed arrow) generated by the at least one electrode 102 laterally across the waveguide 101 (a voltage may be applied to the electrode 102, which gives rise to the electric field across a depletion region) changes in strength along the first waveguide section 103. The waveguide 101 is coupled to a passive optical input waveguide 900 of the EAM 100, and to a passive optical output waveguide 903 of the EAM 100. The waveguide 101 includes the non-linearly tapered first waveguide section 103, and has a second waveguide section 902, particularly with a constant waveguide width, adjacent to the first waveguide section 103 with respect to the length of the waveguide 101. The waveguide 101 includes a one or more quantum well absorber region in the first waveguide section 103. A material absorption coefficient of at least one quantum well changes along the first waveguide section 103.

The EAM 100 has further a first-conductivity-type (p-doped or n-doped) material 901a, e.g. InP, on one side of the waveguide 101, and a second-conductivity-type (n-doped or p-doped) material 901b, e.g. InP, on the other side of the waveguide 101. In the lateral field EAM 100 of FIG. 9, the width of the region, across which the modulating electric field is applied, may reduce with length along the first waveguide section 103, in order to vary the absorption coefficient under typical applied bias voltage. In this case, the optical confinement would also vary, which may lead to a more complex design.

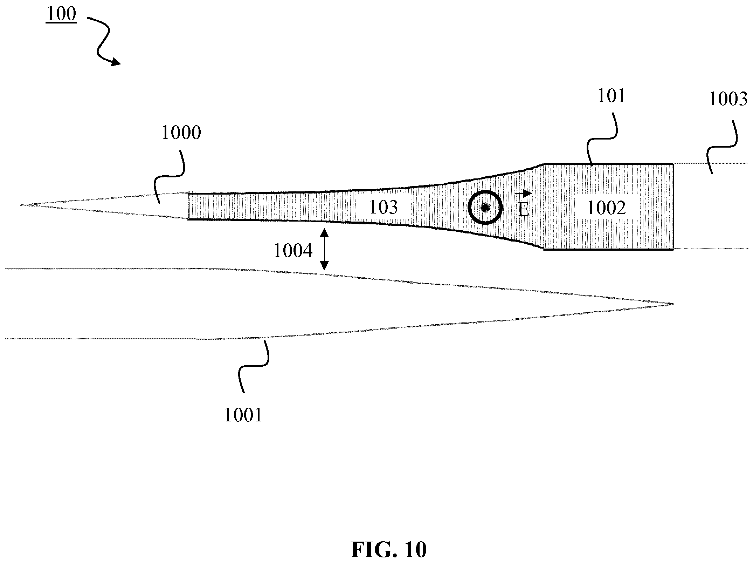

FIG. 10 shows an EAM 100 according to an embodiment of the invention, which builds on the EAM 100 shown in FIG. 1. Same elements in FIG. 1 and FIG. 10 share the same reference signs and function likewise. In particular, FIG. 10 shows the waveguide 101 of the EAM 100, which is formed in this case in a ridge waveguide. The waveguide 101 is coupled to a passive optical waveguide 1000 of the EAM 100, and to a passive optical output waveguide 1003 of the EAM 100. The waveguide 101 includes the non-linearly tapered first waveguide section 103, and has a second waveguide section 1002, particularly with a constant waveguide width, adjacent to the first waveguide section 103 with respect to the length of the waveguide 101. Further, the EAM 100 of FIG. 10 comprises a further waveguide **1001,** which is the optical input waveguide and is arranged next to and laterally coupled to the waveguide 101. A gap 1004 between the waveguide 101 and the further waveguide 1001, and/or a relative width of the waveguide 101 compared to the further waveguide 1001, changes along the first waveguide section 103. That is, in the EAM of FIG. 10, lateral coupling into the EAM waveguide 101 from the adjacent waveguide 1001, which does not modulate the light, is provided. The gap 1004 between the waveguides and/or their relative widths may vary the confinement factor of the quantum wells in the waveguide 101 over the first waveguide section 103. The waveguide 101 includes a one or more quantum well absorber region in the first waveguide section 103. A material absorption coefficient of at least one quantum well changes along the first waveguide section 103.

Embodiments of the present invention have been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. Electroabsorption modulator (100), EAM, the EAM (100) comprising:

    a waveguide (101) configured to guide laser light,
    at least one electrode (102) configured to apply an electric field across the waveguide (101) at least along a first waveguide section (103),
    wherein a width of the waveguide (101) tapers non-linearly at least along the first waveguide section (103),
    wherein the waveguide (101) includes a one or more quantum well absorber region in the first waveguide section (103), and
    wherein the EAM (100) is **characterized in that** a material absorption coefficient of at least one quantum well changes along the first waveguide section (103).

2. EAM (100) according to claim **1,** wherein:
    a width of the first waveguide section (103) defines a lateral confinement of the waveguide (101).

3. EAM (100) according to claim 1 or 2, wherein:
    an optical power of laser light guided in the waveguide (101) decreases linearly along the first waveguide section (103) in the absorbing state during operation.

4. EAM (100) according to any one of claims claim 1 to 3, wherein:
    an absorption coefficient of a guided mode of the waveguide (101) changes along the first waveguide section (103).

5. EAM (100) according to one of the claims 1 to 4, wherein:
    a rate of photocurrent current generated per unit length by laser light guided in the waveguide (101) changes by not more than 20%, particularly changes by not more than 5-10%, more particularly is constant, along the first waveguide section (103).

6. EAM (100) according to one of the claims 1 to 5, wherein:
the waveguide (101) comprises a second waveguide section (202, 802, 902, 1002), particularly with a constant waveguide width, adjacent to the first waveguide section (103) with respect to the length of the waveguide (101).

7. EAM (100) according to one of the claims 1 to 6, wherein:
the waveguide (101) includes an active region, wherein the first waveguide section (103) is included in the active region and covers at least the first half of the total length of the active region of the waveguide (101).

8. EAM (100) according to one of the claims 1 to 7, wherein:
the waveguide (101) is formed in a ridge, particularly in a shallow etched ridge.

9. EAM (100) according to one of the claims 1 to 7, wherein:
the waveguide (101) is formed in a heterostructure, particularly in a buried heterostructure.

10. EAM (100) according to one of the claims 1 to 9, wherein:
an electric field applied by the at least one electrode (102) across the waveguide (101) changes in strength along the first waveguide section (103).

11. EAM (100) according to one of the claims 1 to 10, further comprising:
a further waveguide (1001) arranged next to and laterally coupled to the waveguide (101).

12. EAM (100) according to claim 11, wherein:
a gap (1004) between the waveguide (101) and the further waveguide (1001), and/or a relative width of the waveguide (101) compared to the further waveguide (1001), changes along the first waveguide section (103).

13. EAM (100) according to one of the claims 1 to 12, further comprising:
an input passive waveguide (200, 800, 900) optically coupled to a first end of the waveguide (101) and an output passive waveguide (203, 803, 903, 1003) optically coupled to a second end of the waveguide (101).

14. An externally modulated laser including an EAM (100) according to one of the claims 1 to 13.

## Patentansprüche

1. Elektroabsorptionsmodulator (100), EAM, wobei der EAM (100) Folgendes umfasst:

einen Wellenleiter (101), der zum Leiten von Laserlicht konfiguriert ist, mindestens eine Elektrode (102), die dazu konfiguriert ist, ein elektrisches Feld quer über den Wellenleiter (101) mindestens entlang eines ersten Wellenleiterabschnitts (103) anzulegen, wobei sich eine Breite des Wellenleiters (101) mindestens entlang des ersten Wellenleiterabschnitts (103) nichtlinear verjüngt, wobei der Wellenleiter (101) in dem ersten Wellenleiterabschnitt (103) einen oder mehrere Quantentopf-Absorberregionen aufweist und wobei der EAM (100) **dadurch gekennzeichnet ist, dass** sich ein Materialabsorptionskoeffizient mindestens eines Quantentopfs entlang des ersten Wellenleiterabschnitts (103) ändert.

2. EAM (100) nach Anspruch 1, wobei:
eine Breite des ersten Wellenleiterabschnitts (103) eine laterale Begrenzung des Wellenleiters (101) definiert.

3. EAM (100) nach Anspruch 1 oder 2, wobei:
eine optische Leistung des in dem Wellenleiter (101) geleiteten Laserlichts in dem absorbierenden Zustand während des Betriebs linear entlang des ersten Wellenleiterabschnitts (103) abnimmt.

4. EAM (100) nach einem der Ansprüche 1 bis 3, wobei:
ein Absorptionskoeffizient einer geleiteten Mode des Wellenleiters (101) sich entlang des ersten Wellenleiterabschnitts (103) ändert.

5. EAM (100) nach einem der Ansprüche 1 bis 4, wobei:
eine Rate eines Photostrom-Stroms, der pro Längeneinheit durch das in dem Wellenleiter (101) geleitete Laserlicht erzeugt wird, sich entlang des ersten Wellenleiterabschnitts (103) um nicht mehr als 20 % ändert, besonders um nicht mehr als 5-10 % ändert, insbesondere konstant ist.

6. EAM (100) nach einem der Ansprüche 1 bis 5, wobei:
der Wellenleiter (101) einen zweiten Wellenleiterabschnitt (202, 802, 902, 1002), besonders mit einer konstanten Wellenleiterbreite, umfasst, der in Bezug auf die Länge des Wellenleiters (101) an den ersten Wellenleiterabschnitt (103) angrenzt.

7. EAM (100) nach einem der Ansprüche 1 bis 6, wobei:
der Wellenleiter (101) eine aktive Region beinhaltet, wobei der erste Wellenleiterabschnitt (103) in der aktiven Region beinhaltet ist und mindestens die erste Hälfte der gesamten Länge der aktiven Region des Wellenleiters (101) abdeckt.

8. EAM (100) nach einem der Ansprüche 1 bis 7, wobei:

der Wellenleiter (101) in einem Steg, besonders in einem flachen geätzten Steg, ausgebildet ist.

9. EAM (100) nach einem der Ansprüche 1 bis 7, wobei:
der Wellenleiter (101) in einer Heterostruktur, besonders in einer vergrabenen Heterostruktur, ausgebildet ist.

10. EAM (100) nach einem der Ansprüche 1 bis 9, wobei:
ein elektrisches Feld, das durch die mindestens eine Elektrode (102) quer über den Wellenleiter (101) angelegt wird, seine Stärke entlang des ersten Wellenleiterabschnitts (103) ändert.

11. EAM (100) nach einem der Ansprüche 1 bis 10, ferner umfassend:
einen weiteren Wellenleiter (1001), der neben dem Wellenleiter (101) angeordnet und lateral mit diesem gekoppelt ist.

12. EAM (100) nach Anspruch 11, wobei:
ein Spalt (1004) zwischen dem Wellenleiter (101) und dem weiteren Wellenleiter (1001) und/oder eine relative Breite des Wellenleiters (101) im Vergleich zu dem weiteren Wellenleiter (1001) sich entlang des ersten Wellenleiterabschnitts (103) ändert.

13. EAM (100) nach einem der Ansprüche 1 bis 12, ferner umfassend:
einen passiven Eingangswellenleiter (200, 800, 900), der optisch mit einem ersten Ende des Wellenleiters (101) gekoppelt ist, und einen passiven Ausgangswellenleiter (203, 803, 903, 1003), der optisch mit einem zweiten Ende des Wellenleiters (101) gekoppelt ist.

14. Extern modulierter Laser, einen EAM (100) nach einem der Ansprüche 1 bis 13 beinhaltend.

**Revendications**

1. Modulateur d'électroabsorption (100), EAM, l'EAM (100) comprenant :

un guide d'onde (101) configuré pour guider une lumière laser, au moins une électrode (102) configurée pour appliquer un champ électrique à travers le guide d'onde (101) au moins le long d'une première section de guide d'onde (103), dans lequel une largeur du guide d'onde (101) s'effile de manière non linéaire au moins le long de la première section de guide d'onde (103), dans lequel le guide d'onde (101) comporte une ou plusieurs régions absorbantes à puits quantique dans la première section de guide d'onde (103), et dans lequel l'EAM (100) est **caractérisé en ce**

**que** le coefficient d'absorption du matériau d'au moins un puits quantique varie le long de la première section de guide d'onde (103).

2. EAM (100) selon la revendication 1, dans lequel:
une largeur de la première section de guide d'onde (103) définit un confinement latéral du guide d'onde (101).

3. EAM (100) selon la revendication 1 ou 2, dans lequel :
une puissance optique de la lumière laser guidée dans le guide d'onde (101) diminue de manière linéaire le long de la première section de guide d'onde (103) dans l'état absorbant en fonctionnement.

4. EAM (100) selon l'une quelconque des revendications 1 à 3, dans lequel :
un coefficient d'absorption d'un mode guidé du guide d'onde (101) varie le long de la première section de guide d'onde (103).

5. EAM (100) selon l'une des revendications 1 à 4, dans lequel :
un taux de courant de photocourant généré par unité de longueur par la lumière laser guidée dans le guide d'onde (101) varie de pas plus de 20 %, en particulier de pas plus de 5 à 10 %, plus particulièrement est constant, le long de la première section de guide d'onde (103).

6. EAM (100) selon l'une des revendications 1 à 5, dans lequel : le guide d'onde (101) comprend une seconde section de guide d'onde (202, 802, 902, 1002), en particulier présentant une largeur de guide d'onde constante, adjacente à la première section de guide d'onde (103) par rapport à la longueur du guide d'onde (101).

7. EAM (100) selon l'une des revendications 1 à 6, dans lequel : le guide d'onde (101) comporte une région active, dans lequel la première section de guide d'onde (103) est incluse dans la région active et couvre au moins la première moitié de la longueur totale de la région active du guide d'onde (101).

8. EAM (100) selon l'une des revendications 1 à 7, dans lequel : le guide d'onde (101) est formé dans une crête, en particulier dans une crête gravée peu profondément.

9. EAM (100) selon l'une des revendications 1 à 7, dans lequel : le guide d'onde (101) est formé dans une hétérostructure, en particulier dans une hétérostructure enfouie.

10. EAM (100) selon l'une des revendications 1 à 9, dans lequel : un champ électrique appliqué par l'au moins une électrode (102) à travers le guide d'onde (101) varie d'intensité le long de la première section de guide d'onde (103).

11. EAM (100) selon l'une des revendications 1 à 10, comprenant également :
un autre guide d'onde (1001) disposé à côté du guide d'onde (101) et couplé latéralement à celui-ci.

12. EAM (100) selon la revendication 11, dans lequel :
un interstice (1004) entre le guide d'onde (101) et l'autre guide d'onde (1001), et/ou une largeur relative du guide d'onde (101) par rapport à l'autre guide d'onde (1001), varie le long de la première section de guide d'onde (103).

13. EAM (100) selon l'une des revendications 1 à 12, comprenant également :
un guide d'onde passif d'entrée (200, 800, 900) optiquement couplé à une première extrémité du guide d'onde (101) et un guide d'onde passif de sortie (203, 803, 903, 1003) optiquement couplé à une seconde extrémité du guide d'onde (101).

14. Laser à modulation externe comprenant un EAM (100) selon l'une des revendications 1 à 13.

**FIG. 1**

**FIG. 2**

**FIG. 3**

FIG. 4

FIG. 5

FIG. 6

**FIG. 7**

FIG. 8

**FIG. 9**

**FIG. 10**

EP 3 969 962 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003007719 A1
- US 2007077017 A1
- WO 0188577 A1
- US 6240233 B1
- GB 483283 A
- JP 2004163753 A